# EUROPÄISCHE PATENTANMELDUNG

(11) **EP 4 099 202 A1**
(43) Veröffentlichungstag der Anmeldung: **07.12.2022**
(21) Anmeldenummer: 21185158.9
(22) Anmeldetag: 12.07.2021
(51) Int. Cl.: G06F 21/57, H04L 9/32

(54) **KOMPONENTE, AUTOMATISIERUNGSSYSTEM UND VERFAHREN ZUR AKTUALISIERUNG EINES UPDATEMODULS DER KOMPONENTE**

(30) Priorität: 31.05.2021 DE 102021205542
(71) Anmelder: Siemens Aktiengesellschaft, 80333 München (DE)
(72) Erfinder: Aschauer, Hans, 81829 München (DE); De Santis, Fabrizio, 80634 München (DE); Falk, Rainer, 85586 Poing (DE); Furch, Andreas, 85354 Freising (DE); Schneider, Daniel, 80796 München (DE); Zeschg, Thomas, 81543 München (DE)

(57) **Zusammenfassung**

Die Komponente umfasst ein softwarebasiertes Updatemodul (UM), das zum kryptographisch geschützten Software-Update der Komponente ausgebildet ist, wobei die Komponente zusätzlich ein Updatemodul-Aktualisierungsmodul (EMUR) aufweist, welches zur Aktualisierung des Updatemoduls mit einem aktualisierten Updatemodul (NUM) ausgebildet ist, wobei die Komponente einen Einmal-Schlüsselspeicher aufweist, der zumindest einen kryptographischen Einmal-Schlüssel (PUEUK) zur Verifizierung des aktualisierten Updatemoduls aufweist und wobei das Updatemodul-Aktualisierungsmodul ausgebildet ist, das aktualisierte Updatemodul anhand des zumindest einen kryptographischen Einmal-Schlüssels zu verifizieren.

Das Automatisierungssystem umfasst eine Komponente wie vorhergehend beschrieben.

## Beschreibung

Die Erfindung betrifft eine Komponente mit einem softwarebasierten Updatemodul, ein Automatisierungssystem mit einer Komponente mit einem softwarebasierten Updatemodul sowie ein Verfahren zur Aktualisierung eines Updatemoduls einer Komponente.

Industrielle Anlagen, insbesondere Automatisierungssysteme wie automatisierte Fertigungsanlagen, Bahnautomatisierungssysteme oder Automatisierungssysteme von Smart Grids, weisen regelmäßig Komponenten mit softwarebasierten Updatemodulen auf. Solche Updatemodule sind dazu eingerichtet, Software-Updates der Komponenten einzuspielen.

Bei Komponenten mit softwarebasierten Updatemodulen ist das Software-Update, etwa ein Firmware-Update, ein Anwendungssoftware-Update oder ein Konfigurations-Update, regelmäßig kryptographisch geschützt. Hierbei besteht das Problem, dass bei industriellen Automatisierungssystemen Komponenten häufig mit einer Lebensdauer von mehreren Jahren oder sogar Jahrzehnten eingesetzt werden. Somit muss eine Langlebigkeit von kryptographisch geschützten Update-Verfahren sichergestellt sein. Kryptographische Update-Verfahren beruhen derzeit regelmäßig auf asymmetrischen Signaturen und werden optional durch Verschlüsselung, etwa hybride Verschlüsselung, bei der sowohl ein symmetrischer kryptographischer Algorithmus als auch ein asymmetrischer zum Einsatz kommen, geschützt.

Grundsätzlich kann eine Vielzahl von kryptographischen Verfahren eingesetzt werden, um Update-Verfahren kryptographisch zu schützen. Allerdings ist häufig nicht bekannt, wie langlebig kryptographische Verfahren sind, welche zum kryptographischen Schutz von Update-Verfahren eingesetzt werden. Insbesondere können kryptographische Verfahren gebrochen werden und sind dann nicht weiter zum kryptographischen Schutz von Update-Verfahren einsetzbar. Ein Risiko, dass kryptographische Verfahren nicht mehr zum kryptographischen Schutz von Update-Verfahren einsetzbar sind, ist insbesondere bei langlebigen Komponenten im industriellen Umfeld hoch.

Es ist daher Aufgabe der Erfindung, eine verbesserte Komponente mit einem softwarebasierten Updatemodul bereitzustellen, bei welchem das softwarebasierte Updatemodul ein Software-Update der Komponente möglichst dauerhaft kryptographisch schützen kann. Es ist weiterhin Aufgabe der Erfindung, ein verbessertes Automatisierungssystem bereitzustellen, bei welchem Komponenten auch dauerhaft mit einem kryptographisch geschützten Software-Update versehen werden können. Zudem ist es Aufgabe der Erfindung, ein Verfahren zur Aktualisierung eines Updatemoduls einer Komponente anzugeben.

Diese Aufgabe der Erfindung wird mit einer Komponente mit einem softwarebasierten Updatemodul, das zum kryptographisch geschützten Software-Update der Komponente ausgebildet ist, mit den in Anspruch 1 angegebenen Merkmalen sowie mit einem Automatisierungssystem mit den in Anspruch 10 angegebenen Merkmalen sowie mit einem Verfahren zur Aktualisierung eines Updatemoduls einer Komponente mit den in Anspruch 12 angegebenen Merkmalen gelöst. Bevorzugte Weiterbildungen der Erfindung sind in den zugehörigen Unteransprüchen, der nachfolgenden Beschreibung und der Zeichnung angegeben.

Die erfindungsgemäße Komponente weist ein softwarebasiertes, d. h. als Software realisiertes oder zumindest eine Software aufweisendes, Updatemodul auf, das zum kryptographisch geschützten Software-Update der Komponente ausgebildet ist, d. h. das zum kryptographisch geschützten Update der auf der Komponente installierten Software ausgebildet ist. Zusätzlich umfasst die erfindungsgemäße Komponente ein Updatemodul-Aktualisierungsmodul, welches zur Aktualisierung des Updatemoduls mit einem erneuerten, aktualisierten Updatemodul, also mit einer aktualisierten Software des Updatemoduls, ausgebildet ist. Die Komponente weist einen Einmal-Schlüsselspeicher auf, der zumindest einen kryptographischen Einmal-Schlüssel zur Verifizierung des aktualisierten Updatemoduls aufweist. Dabei ist das Updatemodul-Aktualisierungsmodul ausgebildet, das aktualisierte Updatemodul anhand des zumindest einen kryptographischen Einmal-Schlüssels zu verifizieren.

Unter der Wendung "das aktualisierte Updatemodul verifizieren" wird verstanden, dass eine Authentizität des Updatemoduls verifiziert wird.

Der Begriff "softwarebasiertes Updatemodul" meint dabei ein softwarebasiertes Updatemodul, das es durch ein Update einer Software des Updatemoduls mit einer aktualisierten Software aktualisierbar ist. Die Software des Updatemoduls kann insbesondere als oder mittels Maschinencode und/oder Objektcode und/oder Bytecode und/oder Skript-Code und/oder Bitstream oder mittels einer Zustandsübergangstabelle eines endlichen Automaten (engl.: "finite state machine") implementiert sein. Neben ausführbarem Programmcode kann eine Software des softwarebasierten Updatemoduls auch Konfigurationsdaten und/oder Parameter und/oder Datenelemente umfassen.

Mittels des Updatemodul-Aktualisierungsmoduls kann bei der erfindungsgemäßen Komponente das Updatemodul aktualisiert werden, sodass gegebenenfalls unsichere oder veraltete kryptographische Verfahren des Updatemoduls durch sicherere kryptographische Verfahren ersetzt werden können. Mittels des kryptographischen Einmal-Schlüssels des Einmal-Schlüsselspeichers kann das aktualisierte Updatemodul verifiziert werden, sodass eine unautorisierte Aktualisierung des Updatemoduls wirksam verhindert werden kann.

Besonders vorteilhaft ist die erfindungsgemäße Komponente auf zukünftige Entwicklungen im Bereich des Quantum Computings vorbereitet, da Einmal-Schlüssel zur Verifizierung von Daten, hier zur Verifizierung des aktualisierten Updatemoduls, sicher gegenüber Angriffen mit Quantencomputern ausgebildet sein können. Folglich kann mit einem kryptographischen Einmal-Schlüssel des Einmal-Schlüsselspeichers eine sichere Aktualisierung des Updatemoduls auch bei einer künftigen Verfügbarkeit von leistungsfähigen Quantencomputern gewährleistet werden. Weiterhin vorteilhaft können gegebenenfalls unsicher gewordene kryptographische Verfahren des softwarebasierten Updatemoduls im aktualisierten Updatemodul mit sichereren kryptographischen Verfahren ersetzt sein. Folglich lässt sich die erfindungsgemäße Komponente als langlebige Komponente im industriellen Umfeld, insbesondere in Automatisierungssystemen, dauerhaft einsetzen. Somit ermöglicht die erfindungsgemäße Komponente die Realisierung dauerhaft sicherer Automatisierungssysteme.

Mittels des erfindungsgemäß vorgesehenen kryptographischen Einmal-Schlüssels kann die Aktualisierung des softwarebasierten Updatemoduls insbesondere als Notfall-Aktualisierung erfolgen. Eine solche Notfall-Aktualisierung ist insbesondere dann erforderlich, wenn das ursprünglich im softwarebasierten Updatemodul vorgesehene kryptographische Verfahren zum Schutz des Software-Updates durch erkannte oder bekannt gewordene Schwachstellen der Implementierung oder des zugrundeliegenden Algorithmus kompromittiert sind oder nicht mehr als verlässlich gelten. In solchen Fällen kann folglich eine Notfallaktualisierung der erfindungsgemäßen Komponente mittels des Updatemodul-Aktualisierungsmoduls erfolgen. Eine Notfall-Aktualisierung kann auch als Recovery-Aktualisierung bezeichnet werden, da sie ein Wiederherstellen eines sicheren Gerätezustands nach einem Bruch der regulär verwendeten kryptographischen Update-Verfahren unterstützt.

Bevorzugt ist bei der erfindungsgemäßen Komponente das Software-Update mittels eines Updateschlüsselmaterials des Updatemoduls kryptographisch geschützt und das Updatemodul-Aktualisierungsmodul ist zumindest ausgebildet, das Updateschlüsselmaterial des Updatemoduls zu aktualisieren. Auf diese Weise kann das Updateschlüsselmaterial bei bekannt gewordenen Schwachstellen wie zuvor erläutert mittels des Updatemodul-Aktualisierungsmoduls aktualisiert und durch ein sichereres Schlüsselmaterial ersetzt werden.

In einer bevorzugten Weiterbildung der Erfindung bildet bei der Komponente der zumindest eine kryptographische EinmalSchlüssel einen Schlüssel, vorzugsweise einen öffentlichen Schlüssel, zur Verifikation einer kryptographischen EinmalSignatur. Mittels einer kryptographischen Einmal-Signatur lässt sich zuverlässig eine Verifizierung des aktualisierten Updatemoduls gewährleisten. Insbesondere sind kryptographische Einmal-Signaturen als besonders sicher, insbesondere sicher gegenüber Angriffen mit Quantencomputern, bekannt. Die auf dem zumindest einen kryptographischen Einmal-Schlüssel basierende, d. h. mit dem kryptographischen Einmal-Schlüssel verifizierbare, kryptographische Einmal-Signatur gewährleistet folglich eine besonders hohe und langfristige Sicherheit der erfindungsgemäßen Komponente. Zweckmäßig ist die kryptographische Einmal-Signatur eine hashbasierte kryptographische Einmal-Signatur. Bevorzugt ist bei der erfindungsgemäßen Komponente der zumindest eine kryptographische Einmal-Schlüssel zur Verifikation des aktualisierten Updatemoduls mittels eines kryptographischen Verfahrens der Post-Quantum-Kryptographie. Mittels eines solchen Einmal-Schlüssels kann folglich eine kryptographisch geschützte Aktualisierung des Updatemoduls bei der erfindungsgemäßen Komponente zuverlässig auch dann erreicht werden, wenn leistungsfähige Quantencomputer verfügbar sind. Infolge des Schlüssels der Post-Quantum-Kryptographie kann auch Angriffsszenarien mittels Quantencomputern sicher begegnet werden.

Insbesondere ist bei der erfindungsgemäßen Komponente der kryptographische Einmal-Schlüssel zur Verifikation einer Lamport-Signatur eingerichtet. Lamport-Signaturen stellen bekannterweise besonders sichere Einmal-Signaturen dar, welche insbesondere Angriffen von Quantencomputern standhalten. In dieser Weiterbildung der Erfindung kann folglich das Updatemodul der erfindungsgemäßen Komponente besonders sicher aktualisiert werden kann.

In einer alternativen oder zusätzlichen und ebenfalls vorteilhaften Weiterbildung ist bei der erfindungsgemäßen Komponente der kryptographische Einmal-Schlüssel zur Verifikation einer Winternitz-Signatur eingerichtet. Besonders bevorzugt kommen bei dem kryptographischen Einmal-Schlüssel Signaturverfahren zum Einsatz, welche als WOTS, WOTS+, LOTS oder LM-OTS bekannt sind.

In einer alternativen oder zusätzlichen und ebenfalls vorteilhaften Weiterbildung sind bei der erfindungsgemäßen Komponente mehrere kryptographische Einmal-Schlüssel vorhanden, welche mittels eines Mehrmals-Schlüssel gebildet sind. In diesem Fall werden mehreren kryptographischen EinmalSchlüssel in kompakter Form durch einen Mehrmals-Schlüssel dargestellt, das heißt mittells eines Mehrmals-Schlüssels gebildet. Besonders bevorzugt kommen bei dem kryptographischen Mehrmals-Schlüssel Signaturverfahren zum Einsatz, welche als XMSS und LMS bekannt sind.

Vorzugsweise ist bei der erfindungsgemäßen Komponente das Updatemodul-Aktualisierungsmodul zur Aktualisierung des Einmal-Schlüsselspeichers eingerichtet. Auf diese Weise kann bei einer Aktualisierung des Updatemoduls der erfindungsgemäßen Komponente zudem eine Aktualisierung des Einmal-Schlüsselspeichers erfolgen und es kann der kryptographische Einmal-Schlüssel mit einem weiteren kryptographischen EinmalSchlüssel ersetzt werden. Auf diese Weise kann mittels des ersetzten Einmal-Schlüssels auch nach einer bereits erfolgten Aktualisierung des Updatemoduls eine Notfallaktualisierung für künftige Notfälle, etwa für künftig bekannt gewordene Schwächen von kryptographischen Update-Verfahren, bereitgestellt werden.

Besonders bevorzugt sind bei der erfindungsgemäßen Komponente mehrere kryptographische Einmal-Schlüssel vorgesehen, welche vorzugsweise zur Versionierung des aktualisierten Updatemoduls eingerichtet sind. Auf diese Weise können etwa einige der kryptographischen Einmal-Schlüssel dazu vorgesehen sein, eine Aktualisierung des Updatemoduls auf eine größere Versionsnummer zu erlauben. Andere der kryptographischen EinmalSchlüssel des Einmal-Schlüsselspeichers können zweckmäßig vorgesehen sein, inkrementelle Änderungen des Updatemoduls vorzunehmen, die jedoch keinen Sprung auf eine neue Versionsnummer rechtfertigen.

Bevorzugt ist bei der erfindungsgemäßen Komponente das Updatemodul-Aktualisierungsmodul nicht oder nur nach einer Autorisierungsprüfung veränderlich. Insbesondere ist das Aktualisierungsmodul kryptographisch gegen Veränderungen geschützt, etwa mittels einer weiteren kryptographischen Signatur. Mittels einer solchen weiteren kryptographischen Signatur kann eine Veränderung des Updatemodul-Aktualisierungsmoduls nicht oder nur von einem Inhaber eines zur weiteren kryptographischen Signatur passenden privaten Signatur-Schlüssels erfolgen. Alternativ und ebenfalls vorteilhaft kann das Updatemodul-Aktualisierungsmodul durch einen Hardwareschutz oder durch sonstige Maßnahmen gegenüber Veränderung ohne Autorisierung geschützt sein. Zweckmäßig kann das Updatemodul-Aktualisierungsmodul einen schreibgeschützten Speicher aufweisen, welcher eine Aktualisierungsroutine zur Aktualisierung des Updatemoduls speichert, wobei das Updatemodul-Aktualisierungsmodul die Aktualisierungsroutine ausführt.

Das erfindungsgemäße Automatisierungssystem umfasst eine erfindungsgemäße Komponente wie vorstehend beschrieben. Insbesondere ist das erfindungsgemäße Automatisierungssystem ein industrielles Automatisierungssystem, vorzugsweise eine automatisierte Fertigungsanlage oder ein Bahnautomatisierungssystem und/oder ein Automatisierungssystem eines Smart Grids. Insbesondere in den vorgenannten Automatisierungssystemen werden regelmäßig langlebige Komponenten eingesetzt. Für solche langlebigen Komponenten lässt sich eine erfindungsgemäße Komponente wie vorstehend beschrieben heranziehen, sodass vorteilhaft eine langfristig sichere Updatemöglichkeit gewährleistet werden kann.

Bei dem erfindungsgemäßen Verfahren zur Aktualisierung eines softwarebasierten Updatemoduls einer erfindungsgemäßen Komponente wie vorhergehend beschrieben wird ein aktualisiertes softwarebasiertes Updatemodul mit einem kryptographischen Authentisierungsschlüssel authentisiert, welcher zum kryptographischen Einmal-Schlüssel des Einmal-Schlüsselspeichers der Komponente korrespondiert, wobei der kryptographische Authentisierungsschlüssel mit dem Einmal-Schlüssel des Einmal-Schlüsselspeichers der Komponente verifizierbar ist, und wobei das aktualisierte softwarebasierte Updatemodul zur Aktualisierung des Updatemoduls der Komponente bereitgestellt wird.

Nachfolgend wird die Erfindung anhand eines in der Zeichnung angegebenen Ausführungsbeispiels näher erläutert. Es zeigen:
- Fig. 1: ein erstes Ausführungsbeispiel eines erfindungsgemäßen Automatisierungssystems mit einer erfindungsgemäßen Komponente mit einem softwarebasierten Updatemodul schematisch in einer Prinzipskizze sowie
- Fig. 2: ein zweites Ausführungsbeispiel eines erfindungsgemäßen Automatisierungssystems mit einer erfindungsgemäßen Komponente mit einem softwarebasierten Updatemodul schematisch in einer Prinzipskizze.

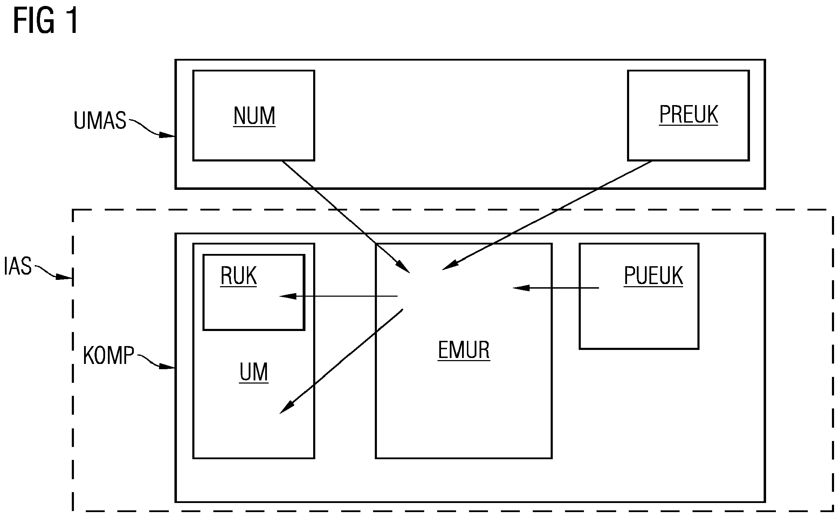

Das in Fig. 1 dargestellte erfindungsgemäße Automatisierungssystem IAS ist eine automatisierte Fertigungsanlage. Das Automatisierungssystem IAS weist eine Komponente KOMP auf, welche eine Anlagensteuerung des Automatisierungssystems IAS bildet. Die Komponente ist zur Steuerung des Fertigungsablaufs innerhalb des Automatisierungssystems IAS eingerichtet.

Grundsätzlich kann das Automatisierungssystem IAS in weiteren, nicht eigens in der Zeichnung dargestellten Ausführungsbeispielen auch ein anderes Automatisierungssystem IAS, etwa ein Bahnautomatisierungssystem sein, wobei die Komponente KOMP beispielsweise ein Zugleitsystem oder ein Zugsicherungssystem ist. In weiteren nicht explizit in der Zeichnung gezeigten Ausführungsbeispielen ist das Automatisierungssystem IAS ein Automatisierungssystem eines Smart Grids und die Komponente KOMP eine Steuerung zur gleichmäßigen Auslastung des Smart Grids oder zum Schutz vor einer Überlastung von Leitungen oder Komponenten des Smart Grids.

Die Komponente KOMP ist mittels einer Steuersoftware zur Steuerung des Fertigungsablaufs eingerichtet. Die Komponente KOMP weist ein softwarebasiertes Updatemodul UM auf, welches zu einem regelmäßigen Update der Steuersoftware der Komponente KOPM ausgebildet ist. Beispielsweise wird die Steuersoftware regelmäßig halbjährlich einem Update unterzogen und zusätzlich im Falle zwischenzeitlich bekanntgewordener Sicherheitslücken im Bedarfsfall akut gepatcht, d. h. die Sicherheitslücken werden geschlossen. Zu diesem Zweck weist das Updatemodul UM einen regulären Updateschlüssel RUK auf, welchen das Updatemodul UM zur kryptographischen Verifizierung einer Authentizität eines Updates der Steuersoftware der Komponente KOPM einsetzt. Ist die kryptographische Verifizierung mittels des regulären Updateschlüssels RUK erfolgt, so unterzieht das Updatemodul UM die Software der Komponente KOMP einem Update.

Die Komponente KOMP ist zum langfristigen Einsatz, d. h. zum Einsatz über zumindest zwei Jahrzehnte, im Automatisierungssystem IAS ausgebildet. In einem Zeitraum von zwei Jahrzehnten muss davon ausgegangen werden, dass zu Beginn dieses Zeitraums eingesetzte kryptographische Algorithmen oder deren Implementierung am Ende dieses Zeitraums jedenfalls nicht notwendigerweise noch als vertrauenswürdig gelten. So stellt sich bisweilen heraus, dass bestimmte kryptographische Algorithmen als unsicher beurteilt werden müssen, da zwischenzeitlich Angriffsmöglichkeiten bekannt geworden sind, aufgrund derer die mit diesen Algorithmen gebildeten kryptographischen Schlüssel oder Signaturen als nicht mehr vertrauenswürdig oder zuverlässig gelten können. Zudem können grundsätzlich auch in der Theorie sichere kryptographische Algorithmen in fehlerhafter oder unsicherer Implementierung vorliegen, sodass mittels solcher Implementierungen generierte kryptographische Schlüssel oder Signaturen nicht mehr als sicher gelten können.

Die erfindungsgemäße Komponente KOMP des erfindungsgemäßen Automatisierungssystems IAS adressiert dieses Problem mittels eines Notfall-Updatemoduls EMUR, welches eine Notfall-Update-Routine beinhaltet, die zur Aktualisierung des Updatemoduls ausgebildet und eingerichtet ist. Die Notfall-Update-Routine ist eine Software-Routine, die auf einem schreibgeschützten Speichermedium, etwa einem physikalisch schreibgeschützten Flash-Speicher, gespeichert ist und zusätzlich mittels einer kryptographischen Signatur oder einer kryptographischen Prüfsumme gegenüber Veränderungen geschützt sein kann. In einer Variante ist die Notfall-Update-Routine eine Software-Routine, die in einem nicht beschreibbaren oder änderbaren Speichermedium der erfindungsgemäßen Komponente KOMP gespeichert ist.

Das Notfall-Updatemodul EMUR ist ausgebildet, im Bedarfsfall die Software des softwarebasierten Updatemoduls UM mit einer aktualisierten Updatesoftware NUM zu überschreiben. Ein solcher Bedarfsfall besteht beispielsweise im Falle einer Sicherheitslücke eines dem regulären Updateschlüssel RUK zugrundeliegenden Algorithmus oder einer Sicherheitslücke der Implementierung eines solchen Algorithmus. So kann mittels des Notfall-Updatemoduls EMUR der Algorithmus oder die Implementierung des Algorithmus, welches dem regulären Updateschlüssel RUK zugrunde liegt, überschrieben werden und durch einen als sicher geltenden neuen Algorithmus oder einer neuen Implementierung ersetzt werden.

Das Notfall-Updatemodul EMUR greift in dem genannten Bedarfsfall auf einen öffentlichen Notfallschlüssel PUEUK der Komponente KOMP zu, der zu einem privaten Notfallschlüssel PREUK eines Updatemodul-Aktualisierungsservers UMAS korrespondiert. Der Updatemodul-Aktualisierungsserver UMAS stellt die aktualisierte Updatesoftware NUM für die Komponente KOMP zur Verfügung. Der öffentliche Notfallschlüssel PUEUK und der private Notfallschlüssel PREUK sind mittels eines post-quantumsicheren Einmalsignaturverfahrens, hier mittels eines hashbasierten Lamport-Signaturverfahrens, generiert. Grundsätzlich können in weiteren, nicht eigens dargestellten Ausführungsbeispielen auch alternativ oder zusätzlich weitere postquantum-sichere Einmalsignaturverfahren, etwa hashbasierte Einmalsignaturverfahren und/oder Winternitz-Signaturverfahren, eingesetzt werden. Mittels des öffentlichen Notfallschlüssels PUEUK kann eine Authentizität einer vom Updatemodul-Aktualisierungsserver UMAS mittels des privaten Notfallschlüssels PREUK signierten aktualisierten Updatesoftware NUM des Updatemodul-Aktualisierungsservers UMAS verifiziert werden. D. h. es kann sichergestellt werden, dass die aktualisierte Updatesoftware NUM vom Updatemodul-Aktualisierungsserver UMAS stammt.

Im Bedarfsfall kann folglich mittels des öffentlichen Notfallschlüssels PUEUK das Updatemodul UM mit einer aktualisierten Updatesoftware NUM aktualisiert werden und mit einem sicheren regulären Updateschlüssel RUK versehen werden.

Für die weiteren Updates der Steuersoftware der Komponente KOMP wird nun der sichere reguläre Updateschlüssel RUK herangezogen.

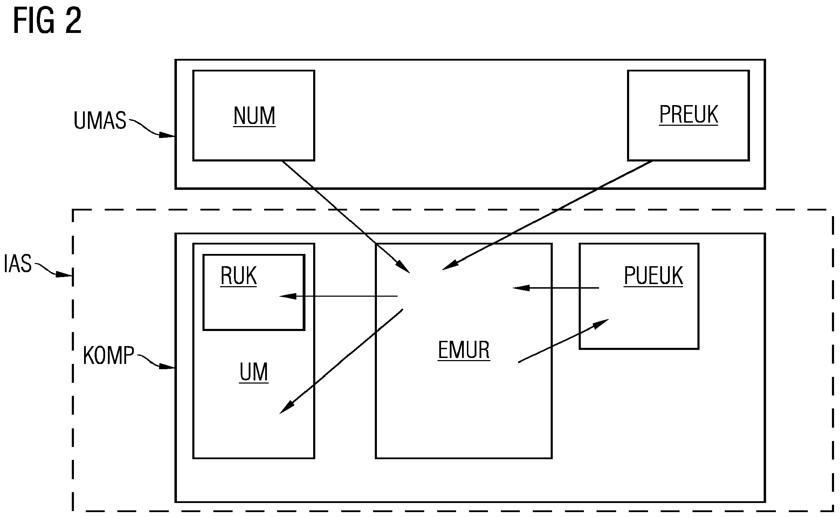

Bei dem in Fig. 1 darstellten Automatisierungssystem IAS ist mittels des Notfall-Updatemoduls EMUR einmalig eine Aktualisierung des Updatemoduls UM mittels eines öffentlichen Notfallschlüssels PUEUK möglich. Im in Fig. 2 dargestellten Ausführungsbeispiel, welches im Übrigen dem in Fig. 1 dargestellten Ausführungsbeispiel entspricht, erfolgt zusätzlich nach einer erfolgten Aktualisierung des Updatemoduls UM eine Aktualisierung des öffentlichen Notfallschlüssels PUEUK. In diesem Ausführungsbeispiel ist das Notfall-Updatemodul EMUR nicht lediglich einmalig zu einer Aktualisierung des Updatemoduls UM eingerichtet, sondern das Notfall-Updatemodul EMUR verfügt jeweils nach jedem eingetretenen Bedarfsfall, bei welchem das Updatemodul UM aktualisiert wird, über einen neuen Einmalschlüssel, welcher sich jeweils bei einem abermaligen Bedarfsfall einsetzen lässt. Folglich besteht bei dem in Fig. 2 dargestellten Ausführungsbeispiel keine Gefahr, dass der öffentliche Notfallschlüssel PUEUK zu früh verbraucht wird.

Alternativ können anstelle eines einzigen öffentlichen Notfallschlüssels PUEUK auch Listen oder Multi-Trees von kryptographischen Einmalschlüsseln in der Komponente KOMP vorgesehen sein, sodass eine Mehrzahl von öffentlichen Notfallschlüsseln nach einer zuvor festgelegten Reihenfolge für künftige Bedarfsfälle zur Verfügung steht. Zweckmäßig kann die Mehrzahl von öffentlichen Notfallschlüsseln die aktualisierten Updatemodule NUM nach einem Versionsschema ordnen, beispielsweise derart, dass bestimmte Notfallschlüssel des Multi-Trees bestimmten Versionsnummern zugeordnet sind.

## Patentansprüche

1. Komponente mit einem softwarebasierten Updatemodul (UM), das zum kryptographisch geschützten Software-Update der Komponente (KOMP) ausgebildet ist, welche zusätzlich ein Updatemodul-Aktualisierungsmodul (EMUR) aufweist, welches zur Aktualisierung des Updatemoduls (UM) mit einem aktualisierten Updatemodul (NUM) ausgebildet ist, wobei die Komponente (KOMP) einen Einmal-Schlüsselspeicher aufweist, der zumindest einen kryptographischen Einmal-Schlüssel (PUEUK) zur Verifizierung des aktualisierten Updatemoduls (NUM) aufweist und wobei das Updatemodul-Aktualisierungsmodul (EMUR) ausgebildet ist, das aktualisierte Updatemodul (NUM) anhand des zumindest einen kryptographischen Einmal-Schlüssels (PUEUK) zu verifizieren.

2. Komponente nach dem vorhergehenden Anspruch, bei welcher das Software-Update mittels eines Updateschlüsselmaterials des Updatemoduls (UM) kryptographisch geschützt ist und bei welchem das Updatemodul-Aktualisierungsmodul (EMUR) zumindest ausgebildet ist, das Updateschlüsselmaterial des Updatemoduls (UM) zu aktualisieren.

3. Komponente nach dem vorhergehenden Anspruch, bei welcher der zumindest eine kryptographische EinmalSchlüssel (PUEUK) einen Schlüssel zur Verifikation einer kryptographischen Einmalsignatur bildet.

4. Komponente nach einem der vorhergehenden Ansprüche, bei welcher der zumindest eine kryptographische Einmal-Schlüssel (PUEUK) zur Verifikation des akutalisierten Updatemoduls (NUM) mittels eines kryptographischen Verfahrens der Post-Quanten-Kryptographie ausgebildet ist.

5. Komponente nach einem der vorhergehenden Ansprüche, bei welcher der zumindest eine kryptographische Einmal-Schlüssel (PUEUK) einen Schlüssel zur Verifikation einer Lamport-Signatur und/oder Winternitz-Signatur und/oder eine Winternitz+ Signatur bildet.

6. Komponente nach einem der vorhergehenden Ansprüche, bei welcher das Updatemodul-Aktualisierungsmodul (EMUR) zur Aktualisierung des Einmal-Schlüsselspeichers eingerichtet ist.

7. Komponente nach einem der vorhergehenden Ansprüche, bei welcher mehrere kryptographische EinmalSchlüssel (PUEUK) vorgesehen sind, welche vorzugsweise zur Versionierung des aktualisierten Updatemoduls (NUM) eingerichtet sind.

8. Komponente nach einem der vorhergehenden Ansprüche, bei welcher die mehreren kryptographischen EinmalSchlüssel (PUEUK) mittels eines Mehrmals-Schlüssels gebildet sind,.

9. Komponente nach einem der vorhergehenden Ansprüche, bei welcher das Updatemodul-Aktualisierungsmodul (EMUR) nicht oder nur nach einer Autorisierung veränderlich ist und insbesondere kryptographisch gegen Veränderung ohne Autorisierung geschützt ist.

10. Automatisierungssystem, umfassend eine Komponente nach einem der vorhergehenden Ansprüche.

11. Automatisierungssystem nach dem vorhergehenden Anspruch, welches ein industrielles Automatisierungssystem, insbesondere eine automatisierte Fertigungsanlage oder ein Bahnautomatisierungssystem und/oder ein Automatisierungssystem eines Smart Grids ist.

12. Verfahren zur Aktualisierung eines softwarebasierten Updatemoduls einer Komponente (KOMP) mit einem Updatemodul (UM) nach einem der vorhergehenden Ansprüche, bei welchem ein aktualisiertes softwarebasiertes Updatemodul (NUM) mit einem zum kryptographischen Einmal-Schlüssel des Einmal-Schlüsselspeichers (PUEUK) der Komponente korrespondierenden kryptographischen Authentisierungsschlüssel (PREUK) authentisiert wird, welcher mit dem Einmal-Schlüssel (PUEUK) des Einmal-Schlüsselspeichers der Komponente verifizierbar ist, und bei welchem das aktualisierte softwarebasierte Updatemodul (NUM) zur Aktualisierung des Updatemoduls (UM) der Komponente (KOMP) bereitgestellt wird.
